(19) Europäisches Patentamt
European Patent Office
Office européen des brevets

(11) **EP 2 357 359 A2**

(12) **EUROPÄISCHE PATENTANMELDUNG**

(43) Veröffentlichungstag:
**17.08.2011 Patentblatt 2011/33**

(51) Int Cl.:
*F03D 7/02* *(2006.01)*      *F03D 11/00* *(2006.01)*

(21) Anmeldenummer: **10191349.9**

(22) Anmeldetag: **16.11.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **17.12.2009 DE 102009058595**

(71) Anmelder: **Siemens Aktiengesellschaft**
**80333 München (DE)**

(72) Erfinder:
• **Hüttner, Jörg, Dr.**
**81825 München (DE)**
• **Gierlich, Roland**
**53359 Rheinbach (DE)**
• **Ziroff, Andreas**
**84032 Passau (DE)**

(54) **Detektion einer Verformung eines Flügels einer Windkraftanlage**

(57)      Detektion einer Verformung eines Flügels einer Windkraftanlage

Die Erfindung betrifft eine Detektion einer Durchbiegung eines Flügels einer Windkraftanlage mit dem Ziel, die Gefahr einer Kollision des Flügels insbesondere mit dem Mast der Windkraftanlage frühzeitig zu erkennen. Hierzu wird eine Anordnung für die Windkraftanlage vorgeschlagen, die einen Funksender und ein dem Funksender zugeordnetes lineares Antennenarray aufweist.

Der Funksender ist an der Flügelspitze angebracht und sendet bspw. kontinuierlich Signal S aus. Das Antennenarray ist am Rotor der Windkraftanlage mitrotierend angebracht und empfängt das Signal S. Anhand der Laufzeiten des Signals vom Rotor zu den Einzelantennen des Arrays lässt sich die relative Position des Funksenders zum Array bestimmen. Bei einer Verbiegung des Flügels bspw. bei starker Windlast ändert sich die relative Position, was mit der erfindungsgemäßen Anordnung erkennbar ist.

FIG 2

EP 2 357 359 A2

## Beschreibung

Die Erfindung betrifft die Erfassung einer Verformung, insbesondere einer Durchbiegung, eines Flügels einer Windkraftanlage.

Eine typische Windkraftanlage weist im Wesentlichen einen Mast sowie einen Rotor mit mehreren, bspw. zwei oder drei Flügeln auf. Im Betrieb der Windkraftanlage rotiert der Rotor mit den Flügeln bspw. in Abhängigkeit von der momentanen Windstärke. Auf dem Mast ist eine Gondel befestigt, in der sich u.a. ein Lager zur Lagerung des Rotors sowie ein Generator zur Umwandlung der entsprechenden Rotationsenergie in elektrische Energie befindet. Derartige Anlagen sind bekannt.

Die Baugrößen derartiger Anlagen nehmen immer weiter zu. Bspw. werden für moderne Windkraftanlagen im Offshore-Bereich, die Nominalleistungen im einstelligen Megawatt-Bereich realisieren, Flügel mit einer Länge in einer Größenordnung von über 50m verwendet. Je größer die baulichen Abmessungen werden, desto stärker sind die mechanischen Belastungen auf Flügel, Rotor, Lager, Mast und letztlich auch auf das Fundament, in dem der Mast verankert ist.

Für die Dimensionierung der Flügel sowie für eine Regelung und Steuerung der Windkraftanlage im Betrieb ist eine genaue Information über die dynamischen Zustände insbesondere der Flügel vonnöten. Bspw. muss die Durchbiegung der Flügel überwacht werden, um ausschließen zu können, dass die Flügel bei Rotation mit dem Mast der Windkraftanlage kollidieren. Die Wahrscheinlichkeit, dass ein Flügel derart stark verbogen wird, dass es zu einer solchen Kollision kommen kann, wächst natürlich mit der Flügellänge sowie mit der momentan auf den Flügel wirkenden Windkraft.

Die Windkraftanlagen werden in der Regel derart ausgerichtet, dass die Windrichtung weitestgehend parallel zur Rotationsachse orientiert ist. Dementsprechend wirkt auf die Flügel eine Kraft, die die rotierenden Flügel in Richtung des Mastes drückt. Dabei wird die Flügelspitze am weitesten aus einer Ruhelage ausgelenkt, in der der Flügel nicht verformt bzw. verbogen ist, d.h. insbesondere in Situationen, in denen keine am Flügel angreifende Windlast vorherrscht.

Bspw. kann ein Seilzugverfahren dazu verwendet werden, eine evtl. Durchbiegung des Flügels zu detektieren, indem die Länge eines Seilzuges überwacht wird, der zwischen der Flügelspitze und einem weiteren Punkt, der idealerweise in der Nähe der Rotationsachse liegt, gespannt ist. Problematisch ist hierbei jedoch im speziellen Fall der Windkraftanlage aufgrund der rotierenden Teile die Befestigung des Seilzuges.

Weiterhin können auch Dehnungsmessstreifen verwendet werden, die auf der Oberfläche des Flügels zu befestigen sind und die bei einer Durchbiegung des Flügels entsprechend mit verformt werden. Das Ausgangssignal der Dehnungsmessstreifen lässt dann Rückschlüsse auf die Durchbiegung zu. Problematisch ist hier der hohe Installationsaufwand und die Anfälligkeit bspw. bei Blitzschlag.

Eine weitere Alternative sind optische Verfahren, bspw. eine Laserabstandsmessung oder eine Auswertung von Kamerabildern. Die Laserabstandsmessung ist insofern problematisch, als dass die Montage für eine optimale Messposition sehr aufwändig ist: Setzt man eine Messposition am statischen Teil der Anlage voraus, ist eine 360°-Überwachung der Flügeldurchbiegung, d.h. eine Überwachung über den gesamten von der Flügelspitze überstrichenen Umfang, nur mit sehr hohem Aufwand realisierbar. Kameraoptische Systeme, die in der Nähe der Rotornabe montiert sind, liefern zwar sehr genaue Auskunft über das dynamische Verhalten des Flügels. Es ist jedoch ein hoher Aufwand für die Signal- bzw. Bildverarbeitung vonnöten. Darüber hinaus arbeiten insbesondere die kameraoptischen Systeme nicht witterungsunabhängig.

Eine Vorrichtung zur Überwachung einer Windenergieanlage hinsichtlich einer möglichen Kollision eines Flügels der Anlage mit deren Mast wird bspw. in der DE 20 2007 001 136 U1 beschrieben. Dort wird ein Abstandssensor für eine berührungslose Messung des Abstandes des Flügels zu einem vorgegebenen Punkt der Windenergieanlage an der Anlage installiert. Bei Unterschreiten eines kritischen Abstandes wird eine Kollisionswarnung ausgegeben. Ein funkbasiertes Überwachungssystem wird in der JP 2008303882 AA beschrieben.

Es ist eine Aufgabe der Erfindung, eine Alternative anzugeben, mit der die Detektion einer Verformung eines Flügels einer Windkraftanlage möglich ist.

Diese Aufgabe wird durch die in den unabhängigen Ansprüchen angegebenen Erfindungen gelöst. Vorteilhafte Ausgestaltungen ergeben sich aus den abhängigen Ansprüchen.

Bei der erfindungsgemäßen Lösung wird ausgenutzt, dass die wesentliche Information, die zur Vermeidung von Flügel-Mast-Kollisionen nutzbar ist, in der Position bzw. Verschiebung insbesondere der Spitze des Flügels in Richtung der Rotationsachse liegt. Grundsätzlich ist es natürlich auch denkbar, nicht speziell die Position der Spitze des Flügels zu überwachen, sondern einen anderen Punkt des Flügels, der in Richtung der Längsachse des Flügels gesehen näher an der Rotationsachse des Rotors liegt als die Flügelspitze. Ebenso können in Richtung der Flügellängsachse gesehen mehrere Punkte überwacht werden, so dass letztlich nicht nur die Auslenkung bzw. Verschiebung des Flügels in einem Punkt ermittelbar ist, sondern je nach Anzahl der überwachten Punkte die tatsächliche Verformung des Flügels bzw. das Verhalten des ganzen Flügels bei einer bestimmten Windlast.

Die Messung einer Auslenkung der Flügelspitze erfolgt erfindungsgemäß mit Hilfe eines aktiven Funkpeilungsverfahrens.

Die erfindungsgemäße Anordnung zur Detektion einer Verformung, insbesondere Durchbiegung, eines Flügels einer Windkraftanlage, wobei die Windkraftanlage aufweist

- einen Mast,
- eine auf dem Mast angeordnete Gondel mit einem Lager,
- einen Rotor, der in dem Lager um eine Rotationsachse R drehbar gelagert ist, und an dem der Flügel derart befestigt ist, dass der Flügel insbesondere bei Windlast gemeinsam mit dem Rotor in Rotation um eine Rotationsachse R versetzbar ist,

zeichnet sich dadurch aus, dass die Anordnung einen Funksender und eine dem Funksender zugeordnete Antenneneinrichtung aufweist, wobei die Antenneneinrichtung ausgebildet ist, um ein von dem Funksender aussendbares Signal S zu empfangen. Dabei ist
- entweder der Funksender oder die Antenneneinrichtung am Flügel angebracht ist und
- mit Hilfe des von der Antenneneinrichtung empfangbaren Signals die Position des Funksenders in Richtung der Rotationsachse R relativ zur Antenneneinrichtung detektierbar.

Die Antenneneinrichtung ist vorteilhafterweise ein Antennenarray mit mehreren Einzelantennen ist. Dabei ist das Array insbesondere ein lineares Antennenarray, dessen Einzelantennen in Richtung der Rotationsachse R gesehen im Wesentlichen hintereinander angeordnet sind.

Es ist eine Auswerteeinrichtung vorgesehen, der die mit den Einzelantennen empfangbaren Signale zuführbar sind, wobei die Auswerteeinrichtung ausgebildet ist, um anhand der ihr zugeführten Signale einen Versatz des Funksenders gegenüber einer Ruhelage zu detektieren.

In einer Ausführungsform ist der Funksender am Flügel, insbesondere an einer äußeren Spitze des Flügels, und die Antenneneinrichtung

- zumindest in Richtung der Rotationsachse gesehen im Wesentlichen ortsfest an der Windkraftanlage angebracht,
- am Rotor, an oder in der Gondel oder am Mast angebracht und/oder
- derart angeordnet, dass sie bei Rotation des Rotors und des Flügels mit rotiert.

Am Flügel können auch mehrere, über die Flügellängsachse verteilt angeordnete Funksender angebracht sein.

In einer weiteren Ausführungsform ist die Antenneneinrichtung am Flügel, insbesondere an einer äußeren Spitze des Flügels, und der Funksender

- zumindest in Richtung der Rotationsachse gesehen im Wesentlichen ortsfest an der Windkraftanlage angebracht,

- am Rotor, an oder in der Gondel oder am Mast angebracht und/oder
- derart angeordnet, dass er bei Rotation des Rotors und des Flügels mit rotiert.

Die Windkraftanlage kann mehrere mit dem Rotor verbundene Flügel aufweisen, wobei je Flügel ein Funksender und eine dem Funksender zugeordnete Antenneneinrichtung vorgesehen sind.

In einem erfindungsgemäßen Verfahren zur Detektion einer Verformung eines Flügels einer Windkraftanlage wird vorausgesetzt, dass die Windkraftanlage aufweist

- einen Mast,
- eine auf dem Mast angeordnete Gondel mit einem Lager,
- einen Rotor, der in dem Lager um eine Rotationsachse R drehbar gelagert ist, und an dem der Flügel derart befestigt ist, dass der Flügel insbesondere bei Windlast gemeinsam mit dem Rotor in Rotation um eine Rotationsachse R versetzbar ist. Erfindungsgemäß

- sendet ein am Flügel angebrachter Funksender ein Signal S aus, welches von einer an der Windkraftanlage angebrachten Antenneneinrichtung empfangen wird, oder
- empfängt eine am Flügel angebrachte Antenneneinrichtung ein von einem Funksender, welcher an der Windkraftanlage angebracht ist, ausgesendetes Signal S.

Dabei wird anhand des Signals S die Position des Funksenders in Richtung der Rotationsachse R relativ zur Antenneneinrichtung detektiert und aus der relativen Position des Funksenders zur Windkraftanlage auf die Verformung des Flügels rückgeschlossen.

Um Eingriffe in die Steuerelektronik zu der Windkraftanlage zu ermöglichen, wird im Idealfall eine permanente 360°-Überwachung realisiert, d.h. die Position der Flügelspitze wird zeitlich ununterbrochen und auf dem gesamten Umfang, den die Flügelspitze überstreicht, überwacht.

Zusammengefasst betrifft die Erfindung also eine Detektion einer Durchbiegung eines Flügels einer Windkraftanlage mit dem Ziel, die Gefahr einer Kollision des Flügels insbesondere mit dem Mast der Windkraftanlage frühzeitig zu erkennen. Hierzu wird eine Anordnung für die Windkraftanlage vorgeschlagen, die einen Funksender und ein dem Funksender zugeordnetes lineares Antennenarray aufweist. In einer beispielhaften Ausgestaltung kann der Funksender an der Flügelspitze angebracht sein und bspw. kontinuierlich ein Signal S aussenden. Das Antennenarray ist am Rotor der Windkraftanlage mitrotierend angebracht und empfängt das Signal S. Anhand der Laufzeiten des Signals vom Rotor zu den Einzelantennen des Arrays lässt sich die relative Position des Funksenders zum Array bestimmen. Bei einer Verbiegung des Flügels bspw. bei starker Windlast ändert sich die relative Position, was mit der erfindungsgemäßen Anordnung erkennbar ist. Wird festgestellt, dass sich die relative Position über ein gewisses Maximum hinaus ändert, dass also die Gefahr einer Kollision besteht, können entsprechende Sicherheitsmaßnahmen ergriffen werden.

Einige Vorteile der Erfindung lassen sich wie folgt zusammenfassen:

- Die permanente 360'-Aufzeichnung der Position der Flügelspitze, aus der sich letztlich auch auf die Durchbiegung des Flügels schließen lässt, gibt Auskunft über das dynamische Verhalten der Windkraftanlage und erlaubt damit eine Unterstützung der Entwicklungsarbeit beim Design der Flügel. Optimierte Konstruktionen bspw. aufgrund einer erzielbaren geringeren Steifigkeit versprechen ein signifikantes Einsparpotential bei den Gesamtkosten der Windenergieanlage.
- Die erfindungsgemäße Bestimmung des Ablagewinkels bzw. des Versatzes der Flügelspitze aus der Ruhelage mittels eines Funkpeilungssystems ist vorteilhafterweise wetter- und witterungsunabhängig.
- Des weiteren ist der Ablagewinkel mit hoher Genauigkeit und mit einer hohen Messrate - im Gegensatz bspw. zu einem kamerabasierten System - messbar.
- Das erfindungsgemäße System ist ohne größeren Aufwand auch bei bestehenden Anlagen nachrüstbar.

Weitere Vorteile, Merkmale und Einzelheiten der Erfindung ergeben sich aus dem im Folgenden beschriebenen Ausführungsbeispiel sowie anhand der Zeichnungen.

Dabei zeigt:

Figur 1 eine Windkraftanlage in perspektivischer Ansicht,

Figur 2 einen Querschnitt durch eine Windkraftanlage mit einem Funksender an der Flügelspitze,

Figur 3 ein Antennenarray mit einem unter einem Ablagewinkel α einfallenden Signal,

Figur 4 einen Querschnitt durch eine Windkraftanlage mit mehreren über die Flügellänge verteilten Funksendern.

In den Figuren sind identische bzw. einander entsprechende Bereiche, Bauteile, Bauteilgruppen oder Verfahrensschritte mit denselben Bezugsziffern gekennzeichnet.

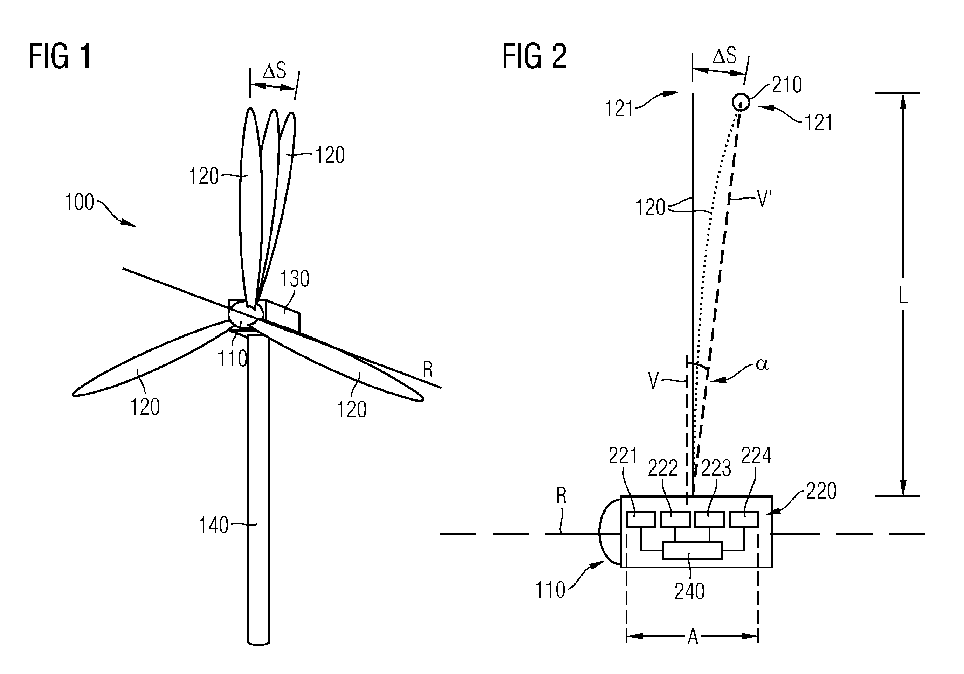

Die Figur 1 zeigt eine Windkraftanlage 100, wie sie aus dem Stand der Technik bekannt ist. Die Windkraftanlage 100 weist einen Rotor 110 auf, an dem im gezeigten Beispiel drei Flügel 120 befestigt sind. Bei Windlast werden die Flügel 120 bekanntermaßen angetrieben, so dass der Rotor 110 in Rotation um eine Rotationsachse R versetzt wird. Die Windkraftanlage 100 weist weiterhin eine Gondel 130 auf, in der (nicht dargestellt) der Rotor 110 gelagert und ein Generator vorgesehen ist, mit dem die Rotationsenergie des Rotors 110 bei Windlast in elektrische Energie umgewandelt wird (weitere bekannte Bauteile einer solchen Windkraftanlage, bspw. Laufgitter, die außen an der Gondel angebracht sind, etc., werden hier nicht im Einzelnen aufgezählt, sondern pauschal der Gondel 130 zugeordnet). Auch dies ist hinlänglich bekannt. Die Gondel 130 ist auf einem Mast 140 der Windkraftanlage befestigt. Dabei ist die Gondel 130 in der Regel drehbar um die Längeachse des Mastes 140 auf dem Mast 140 angeordnet, um eine optimale Ausrichtung des Rotors 110 mit den Flügeln 120 in Abhängigkeit von der Windrichtung W zu ermöglichen.

Die Figur 1 stellt mit Hilfe der durchgezogenen Linien die Situation ohne Windlast dar, d.h. eine Ruhelage der Windkraftanlage. In Ruhelage sind die Flügel 120 nicht durchgebogen oder verformt und befinden sich in der y-z-Ebene eines kartesischen Koordinatensystems K, welches ebenfalls in der Figur 1 dargestellt ist. Die Rotationsachse R ist in Richtung der x-Achse des Koordinatensystems K ausgerichtet. Der Ursprung des Koordinatensystems K liege in x-Richtung gesehen an der Position, an der die Flügel 120 mit dem Rotor 110 verbunden sind. In y- und in z-Richtung liege der Ursprung auf der Rotationsachse R (in der Figur 1 ist dies der Übersichtlichkeit wegen anders dargestellt).

Mit Hilfe der gestrichelten Linien ist in der Figur 1 für einen der Flügel 120 die Situation unter Windlast dargestellt. Die Gondel 130 ist hier derart ausgerichtet, dass die Rotationsachse R parallel zur Windrichtung W orientiert ist. Der gepunktet angedeutete, aufgrund der Windlast verbogene Flügel 120 wird je nach Steifigkeit des Flügels mehr oder weniger weit in Richtung der x-Achse bzw. der Rotationsachse R verbogen. Dabei wird der Versatz der Flügelspitze 121 aus der Ruhelage mit Δs bezeichnet.

Die selbe Situation zeigt die Figur 2, wo in vereinfachter Weise eine Seitenansicht des Rotors 110 mit einem Flügel 120 dargestellt ist. Wie in der Figur 1 ist mit Hilfe einer durchgezogenen Linie der Flügel 120 in der Ruhelage symbolisiert, während mit der gepunkteten Linie der Flügel 120 unter Windlast markiert ist. Wie klar zu erkennen ist, ist der Flügel 120 unter Windlast vergleichsweise stark verbogen. Ebenfalls in der Figur 2 dargestellt sind zwei gestrichelte Hilfslinien V, V' zwischen dem Rotor und der Flügelspitze 121 des Flügels 120 im Ruhezustand sowie zwischen dem Rotor 110 und der Flügelspitze 121 des Flügels 120 unter Windlast. Wie leicht zu erkennen ist, bildet sich zwischen den Verbindungslinien V, V' ein Ablagewinkel α aus, der von dem Versatz Δs der Flügelspitze aus der Ruhelage und damit von der Durchbiegung des Flügels abhängt. In der Ru-

helage gilt dementsprechend $\alpha=0°$.

Erfindungsgemäß ist zumindest an der Spitze 121 des Flügels ein aktiver Funksender 210 vorgesehen, während am Rotor 110 eine mitrotierende Antenneneinrichtung 220 befestigt ist. Die Antenneneinrichtung 220 ist Teil einer Empfangseinrichtung 230, die neben der Antenneneinrichtung 220 auch eine elektronische Auswerteeinrichtung 240 aufweist. Die Auswerteeinrichtung 240 kann wie in der Figur 2 dargestellt in der Gondel 130 untergebracht sein. Alternativ ist es natürlich möglich, Auswerteeinrichtung 240 bspw. im Mast 140 oder an anderer Stelle zu positionieren. Die Empfangseinrichtung 230 bildet zusammen mit dem aktiven Funksender 210 ein Funkpeilungssystem 200, das es erlaubt, den Ablagewinkel $\alpha$ und damit den Versatz $\Delta s$ der Flügelspitze 121 zu bestimmen bzw. zu überwachen.

Die Antenneneinrichtung 220 ist als lineares Antennenarray 220 ausgebildet, welches im gezeigten Beispiel vier Einzelantennen 221-224 aufweist, die in Richtung der Rotationsachse R gesehen hintereinander angeordnet sind. Hiermit ist eine exakte Bestimmung des Ablagewinkels $\alpha$ möglich. Mit steigender Anzahl von Einzelantennen steigt auch die Genauigkeit der Bestimmung des Ablagewinkels $\alpha$. Das Antennenarray 220 ist im hier gezeigten Beispiel mitrotierend am nur schematisch dargestellten Rotor 110 angebracht, so dass gewährleistet ist, dass eine ständige Funkverbindung zwischen Funksender 210 und Antennenarray 220 aufrecht erhalten werden kann. Somit ist eine 360°-Überwachung der Flügeldurchbiegung möglich, d.h. eine Überwachung über den gesamten von der Flügelspitze überstrichenen Umfang, möglich ist. Konkret könnte das Antennenarray 220 bspw. an der Nabe des Rotors 110 montiert sein.

Das zu Grunde liegende Messprinzip besteht darin, dass der aktive Funksender 210 ein Signal S aussendet, das mit den einzelnen Antennen 221-224 empfangen wird. Das Signal S benötigt in der Ruhelage, in der der Flügel 120 nicht verformt ist, zu den unterschiedlichen Antennen 221-224 Laufzeiten $t1_0$ bis $t4_0$, d.h. bspw. zur Antenne 221 eine Laufzeit $t1_0$, zur Antenne 222 eine Laufzeit $t2_0$ usw.

In erster Näherung kann angenommen werden, dass die Laufzeiten $t1_0$ bis $t4_0$ in etwa gleich sind, d.h. auch, dass die gedachten Verbindungslinien zwischen den Einzelantennen 221-224 und dem Funksender 210 näherungsweise parallel zueinander sind. Dies hängt aber natürlich zum Einen von der Position des Antennenarrays 220 in Richtung der Rotationsachse R und zum Anderen von den Proportionen der Windkraftanlage und des Antennenarrays ab, d.h. von der Länge L der Flügel 120 und von der Erstreckung A des Antennenarrays 220 in Richtung der Rotationsachse R. Für den Fall, dass die Erstreckung A gegenüber der Flügellänge L nicht vernachlässigbar ist, würde es sich anbieten, zunächst in der Ruhelage eine Eichung des Funkpeilungssystems durchzuführen, indem bspw. die Laufzeiten $t1_0$ bis $t4_0$ in der Ruhelage gemessen und abgespeichert werden.

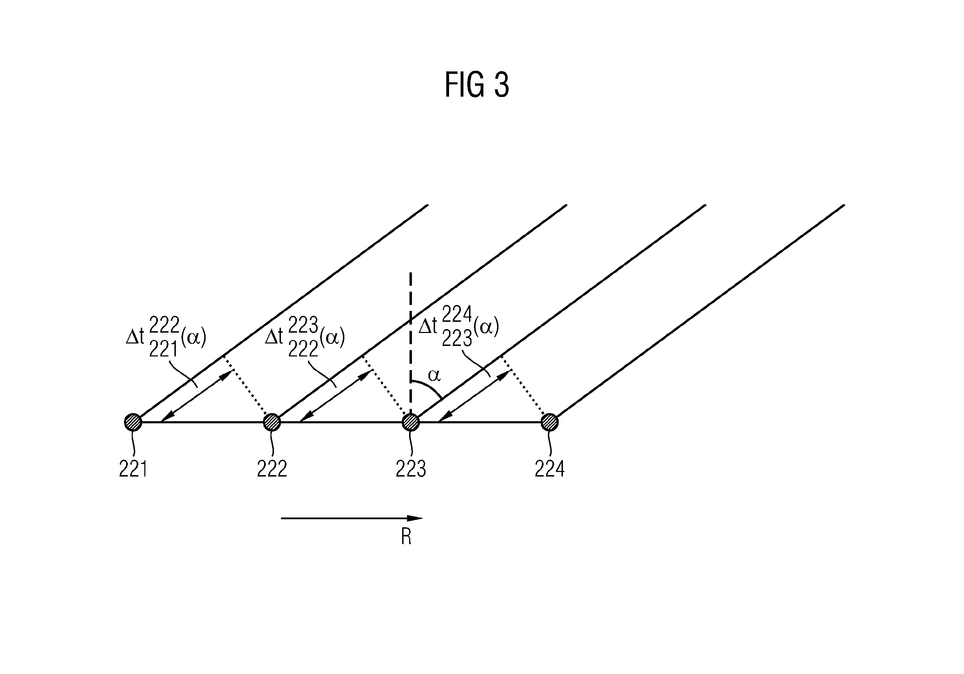

Unter Windlast wird der Flügel 120, wie in den Figuren 1 und 2 dargestellt, verbogen, so dass der Ablagewinkel $\alpha$ einhergehend mit dem Versatz $\Delta s$ der Flügelspitze 121 in Richtung der Rotationsachse R auftritt. In Abhängigkeit vom Ablagewinkel $\alpha$ bzw. vom Versatz $\Delta s$ ergeben sich unterschiedliche Laufzeiten $t1_\alpha$ bis $t4_\alpha$ des Signals S vom Funksender 210 zu den Einzelantennen 221-224 des Antennenarrays 220. Dies ist schematisch in der Figur 3 dargestellt. Zwischen den Laufzeiten zweier benachbarter Antennen des Antennenarrays 220 ergibt sich eine Differenz $\Delta t_j^i(\alpha) = ti_\alpha - tj_\alpha$ (mit i=221, 222, 223 und j=222, 223, 224 und i≠j), wobei $ti_\alpha$ die Laufzeit der Signals S vom Funksender 210 zur Antenne i symbolisiert. Dabei gilt unter Voraussetzung der oben erwähnten Näherung, dass nämlich die gedachten Verbindungslinien zwischen den Einzelantennen und dem Funksender parallel zueinander sind, dass sämtliche Differenzen $\Delta t_j^i(\alpha)$ gleich sind (für alle i, j). Dementsprechend verhält es sich auch mit den Phasen $\varphi221_\alpha$ bis $\varphi224_\alpha$ der an den Einzelantennen 221-224 empfangenen Signale. Aus der Differenz $\Delta t_j^i(\alpha)$ bzw. analog hierzu aus den Phasendifferenzen $\Delta\varphi_j^i(\alpha)$ lässt sich schließlich der Ablagewinkel $\alpha$ und damit der Versatz $\Delta s$ ermitteln.

Die Signalverarbeitung zur Ermittlung des Ablagewinkels $\alpha$ bzw. des Versatzes $\Delta s$ aus den Laufzeiten oder Phasen erfolgt in der Auswerteeinrichtung 240 der Empfangseinrichtung 230. Zur Bestimmung des Ablagewinkels $\alpha$ können verschiedene, an sich bekannte Verfahren eingesetzt werden. Bspw. sind die bereits bekannten FFT- ("fast Fourier transformation"), MUSIC-("multiple signal classification") oder ESPRIT-Algorithmen ("estimation of signal parameters via rotational invariance techniques") hierfür geeignet.

Die Charakteristik und die Geometrie des Antennenarrays 220 sind entscheidend für eine störungsfreie Funktion des Funkpeilungssystems 200. Bei einem größer werdenden Abstand d der Einzelantennen 221-224 voneinander (vgl. Figur 3) erhöht sich auch die Winkelauflösung, d.h. die Genauigkeit der Bestimmung des Ablagewinkels $\alpha$. Gleichzeitig verschlechtert sich allerdings der Eindeutigkeitsbereich. Letzteres kann jedoch durch die Verwendung gerichteter Antennen, deren Hauptkeulenbreite dem Eindeutigkeitsbereich entspricht, ausgeglichen werden.

Als geeignete Funksender 210 kommen verschiedene Sendertypen in Frage, wobei die Empfängerarchitektur natürlich an den ausgewählten Sendertyp anzupassen ist. Von Vorteil ist ein Funksender, der die ihm zur Verfügung stehende Bandbreite weitestgehend ausnutzt, um die Genauigkeit der Winkelmessung zu erhöhen. Bspw. würden sich sog. CW- ("continuous wave"), FMCW- ("frequency modulated continuous wave") oder UWB-Sender (ultra wide band) eignen:

- Von einem CW-Sender wird ein unmoduliertes Trägersignal ausgesendet, d.h. nur eine einzelne Frequenzlinie. Dies erlaubt eine sehr einfache Sender- und Empfängerarchitektur. Die Bestimmung des Versatzes $\Delta s$ bzw. des Ablagewinkels $\alpha$ erfolgt wie oben beschrieben in der Auswerteeinrichtung 240 der Empfangseinrichtung 230.

- Von einem FMCW-Sender wird im Unterschied zum CW-Sender keine einzelne, konstante Frequenzlinie ausgesendet. Die Frequenz eines von einem FMCW-Sender ausgesendeten Signals wird mit der Zeit variiert. Insbesondere, aber nicht notwendigerweise, besteht zwischen der Zeit und der Frequenz des Signals ein linearer Zusammenhang. FMCW-Signale ermöglichen eine höhere Messgenauigkeit und Zuverlässigkeit, da sie eine höhere Bandbreite nutzen als CW-Signale und da der jeweils verwendete Kanal auch zeitlich auflösbar ist.

- Ein UWB-Sender sendet Signale mit einer sehr großen Bandbreite aus. Bei Anwendungen von UWB-Systemen wird unterschieden zwischen Multiband-OFDM-Systemen ("Orthogonal Frequency Division Multiplex") und Pulsübertragungsverfahren. Insbesondere die Pulsübertragungsverfahren sind für die hier vorliegende Anwendung besonders vielversprechend, da sie aufgrund der Verwendung kurzer Pulse, bspw. mit Pulsdauern <2ns, energiesparende Konzepte für den Funksender an der Flügelspitze beinhalten. Für den Empfang und die Auswertung solcher Signale gibt es verschiedene Empfängerkonzepte. Eine geeignete Möglichkeit ist bspw. ein Empfang basierend auf einer Frequenzbereichsauswertung, bei der stufenweise das gesamte UWB-Band ausgewertet wird. Diese Methode stellt quasi eine Kombination aus den beiden zuvor vorgestellten Methoden (CW, FMCW) dar, da sich ein gepulstes Signal aus einer Vielzahl von einzelnen Trägern zusammen setzt, die den Abstand der Pulswiederholrate zueinander haben. Grundsätzlich sind sämtliche kohärenten Empfängerarchitekturen einsetzbar.

Idealerweise ist natürlich nicht nur ein Flügel der Windkraftanlage mit einem Funksender ausgestattet, sondern alle Flügel. Dementsprechend wären auch mehrere Antennenarrays am Rotor angebracht.

Je nach Flügellänge und Reichweite des Funksenders kann es sinnvoll sein, den Funksender nicht an der äußeren Spitze des Flügels zu befestigen, sondern in einem Bereich, der radial gesehen weiter innen liegt.

Beim oben beschriebenen System ist das Antennenarray mitrotierend auf dem Rotor der Windkraftanlage angeordnet. Dies erlaubt die ununterbrochene Überwachung der Position der Flügelspitze während des gesamten Umlaufs. Grundsätzlich ist es aber natürlich möglich, das Antennenarray ortsfest bzw. nicht mitrotierend anzuordnen, bspw. an der Gondel. In diesem Fall wäre es dann, wenn an jedem Flügel ein Funksender angeordnet ist, auch nicht unbedingt notwendig, je Funksender ein separates Antennenarray vorzusehen. Es könnte ein einzelnes, gemeinsames Antennenarray verwendet werden. Vorteilhafterweise wären dann die von den einzelnen Funksendern ausgesendeten Signale derart kodiert, dass die Signale den Funksendern und damit den Flügeln eindeutig zuzuordnen sind.

Da die Flügel einer Windkraftanlage in der Regel nicht massiv ausgebildet sind, ist es grundsätzlich denkbar, den Funksender innerhalb des Flügels anzuordnen.

Ebenso wäre es grundsätzlich denkbar, das Antennenarray am Flügel anzuordnen, während der Funksender mitrotierend am Rotor oder ortsfest an der Gondel befestigt ist. Unabhängig davon, welche der beiden Komponenten - Funksender oder Antenneneinrichtung - am Flügel befestigt ist, sind für die "andere" Komponente natürlich vielfältige Möglichkeiten zur Positionierung vorstellbar. Lediglich die evtl. bestehende Anforderung, dass eine 360°-Überwachung möglich sein soll, legt fest, dass die andere Komponente am Rotor oder an einem anderen mitrotierenden Teil befestigt sein muss. Bspw. ist es in diesem Fall auch denkbar, die eine Komponente an der Flügelspitze, d.h. am von der Rotationsachse aus gesehen distalen Ende des Flügels, anzubringen und die andere Komponente nicht am Rotor zu befestigen sondern am proximalen Ende des Flügels, also bspw. in unmittelbarer Nähe der Befestigungsstelle des Flügels am Rotor. Ist keine 360°-Überwachung gefordert, kann die andere Komponente an einer Position an der Windkraftanlage angebracht werden, an der sichergestellt ist, dass zumindest zeitweise eine direkte Funkverbindung zwischen Funksender und Antenneneinrichtung möglich ist. Eine Anforderung an die Positionierung der anderen Komponente besteht darin, sicherzustellen, dass deren Position auch bei Windlast zumindest in Richtung der Rotationsachse R gesehen ortsfest bleibt, insbesondere relativ zum Mast. Diese Forderung ist erfüllt, wenn die andere Komponente bspw. am Rotor, an der Gondel, am Mast oder sogar am Fundament der Windkraftanlage befestigt ist, wobei sich bei letzterer Ausbildung eine Schwingung der Windkraftanlage selbst störend auswirken kann.

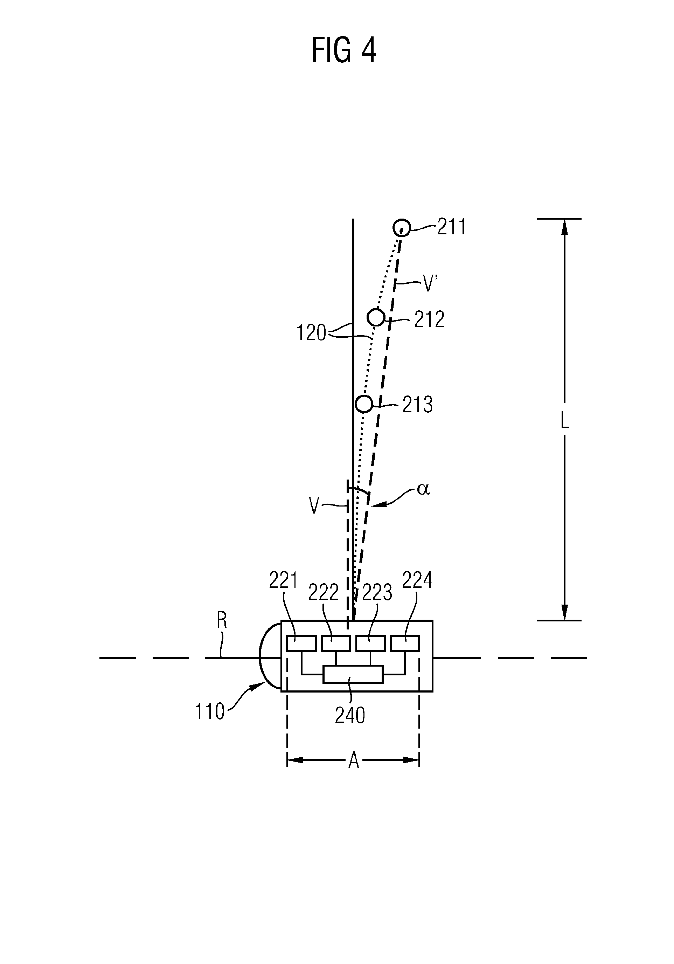

Die Figur 4 zeigt schließlich eine Anordnung entsprechend der Figur 2, bei der nicht nur ein Funksender an der Spitze des Flügels 120 angebracht ist, sondern mehrere im Wesentlichen gleichartige Funksender 211, 212, 213, die über die Flügellängsachse verteilt angeordnet sind. Mit dieser Anordnung ist es möglich, nicht nur die Position der Spitze zu überwachen, sondern die Verformung des Flügels über seine gesamte Länge. Dies kann Aufschlüsse über die Dynamik, das Schwingungsverhalten, die Stabilität/Steifigkeit und evtl. andere Parameter des Flügels liefern. Mit steigender Anzahl von über die Flügellänge verteilten Funksendern ist natürlich eine genauere Überwachung möglich. Die unterschiedlichen Funksender können bspw. das jeweils ausgesendete Signal unterschiedlich kodieren, so dass in der anschließenden Auswertung der mit dem Antennenarray 220 empfangenen Signale in der Auswerteeinrichtung 240 zwischen den verschiedenen Signalen der einzelnen Funksender unterschieden werden kann.

Je nach Bedarf bietet sich natürlich eine Kombination der oben dargestellten Möglichkeiten an.

**Patentansprüche**

1. Anordnung zur Detektion einer Verformung, insbesondere Durchbiegung, eines Flügels (120) einer Windkraftanlage (100), wobei die Windkraftanlage (100) aufweist

   - einen Mast (140),
   - eine auf dem Mast angeordnete Gondel (130) mit einem Lager,
   - einen Rotor (110), der in dem Lager um eine Rotationsachse R drehbar gelagert ist, und an dem der Flügel (120) derart befestigt ist, dass der Flügel (120) insbesondere bei Windlast gemeinsam mit dem Rotor (110) in Rotation um eine Rotationsachse R versetzbar ist,
   **dadurch gekennzeichnet, dass** die Anordnung einen Funksender (210) und eine dem Funksender (210) zugeordnete Antenneneinrichtung (220) aufweist, wobei die Antenneneinrichtung (220) ausgebildet ist, um ein von dem Funksender (210) aussendbares Signal S zu empfangen, und wobei
   - entweder der Funksender (210) oder die Antenneneinrichtung (220) am Flügel (120) angebracht ist und
   - mit Hilfe des von der Antenneneinrichtung (220) empfangbaren Signals die Position des Funksenders (210) in Richtung der Rotationsachse R relativ zur Antenneneinrichtung (220) detektierbar ist.

2. Anordnung nach Anspruch 1, **dadurch gekennzeichnet, dass** die Antenneneinrichtung (220) ein Antennenarray (220) mit mehreren Einzelantennen (221-224) ist.

3. Anordnung nach Anspruch 2, **dadurch gekennzeichnet, dass** das Antennenarray (220) ein lineares Antennenarray aufweist, dessen Einzelantennen (221-224) in Richtung der Rotationsachse R gesehen im Wesentlichen hintereinander angeordnet sind.

4. Anordnung nach einem der Ansprüche 2 oder 3, **dadurch gekennzeichnet, dass** eine Auswerteeinrichtung (240) vorgesehen ist, der die mit den Einzelantennen (221-224) empfangbaren Signale zuführbar sind, wobei die Auswerteeinrichtung (240) ausgebildet ist, um anhand der ihr zugeführten Signale einen Versatz ($\Delta s$, $\alpha$) des Funksenders (210) gegenüber einer Ruhelage zu detektieren.

5. Anordnung nach einem der vorhergehenden Ansprüche, **dadurch gekennzeichnet, dass** der Funksender (210) am Flügel (120), insbesondere an einer äußeren Spitze (121) des Flügels (120), und die Antenneneinrichtung (220) zumindest in Richtung der Rotationsachse gesehen im Wesentlichen ortsfest an der Windkraftanlage (100) angebracht ist.

6. Anordnung nach einem der vorhergehenden Ansprüche, **dadurch gekennzeichnet, dass** der Funksender (210) am Flügel (120), insbesondere an einer äußeren Spitze (121) des Flügels (120), und die Antenneneinrichtung (220) am Rotor (110), an oder in der Gondel (130) oder am Mast (140) angebracht ist.

7. Anordnung nach einem der vorhergehenden Ansprüche, **dadurch gekennzeichnet, dass** der Funksender (210) am Flügel (120), insbesondere an einer äußeren Spitze (121) des Flügels (120), und die Antenneneinrichtung (220) derart angeordnet ist, dass sie bei Rotation des Rotors (110) und des Flügels (120) mit rotiert.

8. Anordnung nach einem der Ansprüche 5 bis 7, **dadurch gekennzeichnet, dass** am Flügel (120) mehrere, über die Flügellängsachse verteilt angeordnete Funksender (211, 212, 213) angebracht sind.

9. Anordnung nach einem der Ansprüche 1 bis 4, **dadurch gekennzeichnet, dass** die Antenneneinrichtung (220) am Flügel (120), insbesondere an einer äußeren Spitze (121) des Flügels (120), und der Funksender (210) zumindest in Richtung der Rotationsachse gesehen im Wesentlichen ortsfest an der Windkraftanlage (100) angebracht ist.

10. Anordnung nach einem der Ansprüche 1 bis 4 oder nach Anspruch 9, **dadurch gekennzeichnet, dass** die Antenneneinrichtung (220) am Flügel (120), insbesondere an einer äußeren Spitze (121) des Flügels (120), und der Funksender (210) am Rotor (110), an oder in der Gondel (130) oder am Mast (140) angebracht ist.

11. Anordnung nach einem der Ansprüche 1 bis 4 oder nach Anspruch 9 oder 10, **dadurch gekennzeichnet, dass** die Antenneneinrichtung (220) am Flügel (120), insbesondere an einer äußeren Spitze (121) des Flügels (120), und der Funksender (210) derart angeordnet ist, dass er bei Rotation des Rotors (110) und des Flügels (120) mit rotiert.

12. Anordnung nach einem der vorhergehenden Ansprüche, **dadurch gekennzeichnet, dass** die Windkraftanlage (100) mehrere mit dem Rotor (110) verbundene Flügel (120) aufweist, wobei je Flügel (120) eine einen Funksender (210) und eine dem Funksender (210) zugeordnete Antenneneinrichtung (220) vorgesehen sind.

13. Verfahren zur Detektion einer Verformung eines Flügels (120) einer Windkraftanlage (100), wobei die Windkraftanlage (100) aufweist

- einen Mast (140),
- eine auf dem Mast angeordnete Gondel (130) mit einem Lager,
- einen Rotor (110), der in dem Lager um eine Rotationsachse R drehbar gelagert ist, und an dem der Flügel (120) derart befestigt ist, dass der Flügel (120) insbesondere bei Windlast gemeinsam mit dem Rotor (110) in Rotation um eine Rotationsachse R versetzbar ist,
**dadurch gekennzeichnet, dass**
- ein am Flügel (120) angebrachter Funksender (210) ein Signal S aussendet, welches von einer an der Windkraftanlage (100) angebrachten Antenneneinrichtung (220) empfangen wird, oder
- eine am Flügel (120) angebrachte Antenneneinrichtung (220) ein von einem Funksender (210), welcher an der Windkraftanlage (100) angebracht ist, ausgesendetes Signal S empfängt, wobei
- anhand des Signals S die Position des Funksenders (210) in Richtung der Rotationsachse R relativ zur Antenneneinrichtung (220) detektiert wird und
- aus der relativen Position des Funksenders (210) zur Windkraftanlage (100) auf die Verformung des Flügels (120) rückgeschlossen wird.

FIG 1

FIG 2

EP 2 357 359 A2

FIG 3

EP 2 357 359 A2

$\Delta t_{221}^{222}(\alpha)$  $\Delta t_{222}^{223}(\alpha)$  $\Delta t_{223}^{224}(\alpha)$

$\alpha$

221  222  223  224

R

# FIG 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202007001136 U1
- JP 2008303882A A